# EUROPÄISCHE PATENTSCHRIFT

(11) **EP 3 902 670 B1**
(45) Veröffentlichungstag und Bekanntmachung des Hinweises auf die Patenterteilung: **12.07.2023**
(21) Anmeldenummer: 20713513.8
(22) Anmeldetag: 26.02.2020
(51) Int. Cl.: B30B 15/26, G01N 27/22, B30B 5/06, B30B 15/00, F16N 29/02, B27N 3/24, F16N 7/00, B27N 1/02

(54) **KONTINUIERLICH ARBEITENDE PRESSE MIT VORRICHTUNG ZUR ÜBERWACHUNG DES SCHMIERZUSTANDES EINES MIT SCHMIERMITTEL BEAUFSCHLAGTEN UMLAUFENDEN BANDES UND ENTSPRECHENDES VERFAHREN**
CONTINUOUSLY OPERATING PRESS WITH APPARATUS FOR MONITORING THE LUBRICATING STATE OF A REVOLVING BELT, TO WHICH A LUBRICANT HAS BEEN APPLIED, AND RELEVANT PROCESS
PRESSE À FONCTIONNEMENT EN CONTINU AVEC DISPOSITIF POUR SURVEILLER L'ÉTAT DE LUBRIFICATION D'UNE BANDE ROTATIVE SUR LAQUELLE UN LUBRIFIANT A ÉTÉ APPLIQUÉ ET PROCÉDÉ PERTINENT

(30) Priorität: 20.03.2019 DE 102019107137
(43) Veröffentlichungstag der Anmeldung: 03.11.2021
(73) Patentinhaber: Siempelkamp Maschinen- und Anlagenbau GmbH, 47803 Krefeld (DE)
(72) Erfinder: GARTZ, Klaus, 41749 Viersen (DE)
(74) Vertreter: Andrejewski - Honke Patent- und Rechtsanwälte Partnerschaft mbB
(86) Internationale Anmeldenummer: PCT/EP2020/055042
(87) Internationale Veröffentlichungsnummer: WO 2020/187541

(56) Entgegenhaltungen:
- EP-A1- 0 585 589
- EP-A2- 1 197 808
- DE-A1- 10 151 703
- DE-A1-102016 102 931
- DE-T2- 69 412 217
- US-B2- 6 523 505

## Beschreibung

Die Erfindung betrifft eine kontinuierlich arbeitende Presse mit einer Vorrichtung zur Überwachung des Schmierzustandes eines mit einem Schmiermittel beaufschlagten, umlaufenden Bandes für den Transport von Pressgut, mit einem oder mehreren, im Bereich des

Bandes angeordneten Sensoren, mit denen zumindest ein von der Schmiermittelmenge auf dem Band abhängiges Messsignal erzeugbar ist.

Ferner betrifft die Erfindung ein Verfahren zur Überwachung des Schmierzustandes eines mit einem Schmiermittel beaufschlagten, umlaufenden Bandes in einer kontinuierlich arbeitenden Presse.

Die kontinuierliche Presse umfasst ein oberes, endlos umlaufendes Band bzw. Pressband und ein unteres, endlos umlaufendes Band bzw. Pressband, wobei Pressgut durch den Pressspalt zwischen dem oberen und dem unteren Band hindurchgeführt und unter Anwendung von Druck und/oder Wärme zu einer Platte bzw. einem endlosen Plattenstrang verpresst wird. Die endlos umlaufenden Bänder einer solchen Presse werden auch als Pressbänder bezeichnet und sie sind bevorzugt als Stahlbänder ausgebildet.

Bevorzugt handelt es sich bei einer solchen kontinuierlich betreibbaren Presse um eine Doppelbandpresse, bei der im Pressenoberteil eine obere (beheizbare) Pressenplatte und im Pressenunterteil eine untere (beheizbare) Pressenplatte vorgesehen sind und wobei im Pressenoberteil das endlos umlaufende obere Pressband und im Pressenunterteil das endlos umlaufende untere Pressband geführt sind. Die Pressbänder sind bevorzugt unter Zwischenschaltung von Wälzkörpern, z.B. Rollstäben oder Rollstangen, an den Pressenplatten abgestützt. Die erforderlichen Presskräfte werden mit Kraftmitteln, insbesondere mit hydraulischen Presszylindern aufgebracht, mit denen z.B. die obere und/oder die untere Pressenplatte beaufschlagt wird und die sich an einem Pressengestell, z.B. an den Pressenrahmen eines Pressengestells abstützen. Die Rollstäbe sind z.B. an Rollstabketten angeschlossen und mit Hilfe solcher Rollstabketten im Umlauf geführt.

Eine solche Presse, die auch kontinuierlich arbeitende Presse genannt wird, wird z.B. für die Herstellung von Holzwerkstoffplatten eingesetzt. Holzwerkstoffplatten meint insbesondere Faserplatten, Spanplatten oder OSB-Platten. Alternativ betrifft die Erfindung aber auch derartige Pressen für die Herstellung von Verbundplatten oder von Verbundbauteilen, z.B. aus Faserverbundwerkstoffen oder dergleichen oder auch von Kunststoffplatten oder Kunststoffmatten.

Das Pressgut (z.B. eine Pressgutmatte) wird im Pressspalt der kontinuierlich arbeitenden Presse zwischen den umlaufenden Stahlbändern bzw. Pressbändern unter Anwendung von Druck- und Wärme verpresst, so dass aus dem Pressgut z.B. ein plattenförmiges Produkt, z.B. eine Holzwerkstoffplatte hergestellt wird. Dabei rollen die Rollstäbe an den Pressenplatten als Wälzkörperaggregate ab. Aufgrund üblicher Fertigungstoleranzen bzw. minimalsten Abweichungen der Rollstabform von der perfekten Zylinderform kann es im Zuge der Abrollbewegung zu Weg- bzw. Längenunterschieden an den beiden äußeren Enden der Rollstäbe kommen, die durch einen Mikroschlupf kompensiert werden. Vor diesem Hintergrund ist es in der Praxis üblich und technisch erforderlich, die Rollstäbe bzw. deren zylindrische Oberfläche und/oder die korrespondierende Fläche des umlaufenden Bandes mit einem Schmiermittel zu schmieren. Ein solches Schmiermittel ist bevorzugt als flüssiges Schmiermittel (z.B. Öl) ausgebildet und es wird in der Praxis z.B. mit Hilfe von Düsen oder dergleichen im Einlaufbereich oder im Rollstabumlauf auf die Rollstäbe und/oder auf die Pressbänder aufgebracht, z.B. aufgesprüht. Es erfolgt demnach eine Beaufschlagung der den Rollstangen zugewandten (inneren) Oberfläche des endlos umlaufenden Bandes mit einem Schmiermittel, und zwar entweder unmittelbar durch z.B. Bedüsung der Bandoberfläche oder mittelbar über die mit dem Schmiermittel beaufschlagten (z.B. bedüsten) Rollstangen.

Für den einwandfreien Betrieb einer kontinuierlich betreibbaren Presse ist eine einwandfreie Schmierung von besonderer Bedeutung, wobei in der Regel einerseits eine Unterschmierung und andererseits eine Überschmierung verhindert werden soll. Es ist daher in der Praxis vorgesehen, den Schmierzustand bzw. die durch die Bedüsung aufgebrachte Schmiermittel- bzw. Ölmenge zu überwachen, und zwar in der Regel manuell bzw. visuell durch das Servicepersonal aufgrund von Erfahrungswerten. Dabei soll darauf geachtet werden, dass sich die auf die Bandoberfläche zur Schmierung aufgebrachte Schmiermittelmenge gleichmäßig verteilt und keine Bereiche entstehen, in denen die Schmierung aufgrund von Schmiermittelmangel, z. B. Ölmangel nicht ausreichend bemessen ist. Grundsätzlich haben sich diese einfachen Maßnahmen in der Praxis bewährt. Es besteht jedoch das Bedürfnis die Überwachung zu optimieren und insbesondere zu automatisieren. So besteht insbesondere das Bedürfnis, eine zuverlässige und quantifizierbare Überwachung einzurichten, um einerseits zuverlässig Mangelschmierungen zu verhindern und andererseits den Schmiermittelverbrauch z. B. aus wirtschaftlichen Gründen innerhalb der erforderlichen Grenzen zu halten.

Kontinuierlich arbeitende Pressen mit zugehörigen Schmiersystemen sind z.B. aus der DE 31 48 412 A1, DE 40 15 706 A1 sowie DE 41 26 717 C1 bekannt.

Aus der DE 10 2016 102 931 B4 ist ferner eine kontinuierlich arbeitende Presse gemäß dem Oberbegriff des Anspruchs 1 bekannt, mit einer Vorrichtung zur Überwachung und/oder Regelung eines Schmierzustandes bei der ein oder mehrere Sensoren zum Messen eines physikalischen Phänomens vorgesehen sind, das mit einer Schmiermittelmenge auf dem Band zusammenhängt. Dazu soll eine Auswerteeinheit zum Ermitteln eines Schmierparameters als Kenngröße für eine Schmiermittelmenge auf dem Band basierend auf dem Messwert des Sensors vorgesehen sein. Als Sensor kann z.B. ein Lichtsensor zum Messen eines Lichtreflexionswertes des Bandes und/oder einer Rollstange oder ein Lichtsensor zum Messen eines Lichtabsorptionswertes des Bandes und/oder einer Rollstange der Presse sein. Alternativ können ein Leitfähigkeitssensor, ein Laserabstandsensor oder ein Ultraschallsensor zum Einsatz kommen. Des Weiteren werden Druck-, Zug-, Leistungs- und/oder Kraftsensoren erwähnt. Es soll eine steuerbare Schmiereinheit zum Aufbringen von Schmiermittel vorgesehen sein, die mit einer Regeleinrichtung zur Regelung einer von der Schmiereinheit aufgebrachten Schmiermittelmenge basierend auf dem ermittelten Schmierparameter eingerichtet ist.

Ausgehend von dem vorbekannten Stand der Technik liegt der Erfindung das technische Problem zugrunde, eine kontinuierlich arbeitende Presse sowie ein Verfahren zu schaffen, mit der bzw. mit dem sich der Schmierzustand eines umlaufenden Bandes mit einfachen Mitteln besonders zuverlässig überwachen lässt.

Zur Lösung dieser Aufgabe lehrt die Erfindung bei einer gattungsgemäßen Vorrichtung der eingangs beschriebenen Art, dass der Sensor oder die Sensoren als kapazitiv arbeitende Sensoren ausgebildet ist/sind, die jeweils zumindest eine in einem Abstand (parallel) zum Band angeordnete Fühlerplatten (aus einem elektrisch leitfähigen Material, z.B. aus Metall) aufweisen, die mit dem (elektrischen leitfähigen und z.B. geerdeten) Band jeweils einen Kondensator bilden, dessen Kapazität von der auf dem Band (zwischen der Fühlerplatte und dem Band) angeordneten Schmiermittelmenge abhängt.

Die Erfindung geht dabei von der Erkenntnis aus, dass sich der Schmierzustand einer Presse bzw. die auf der Bandoberfläche befindliche Schmiermittelmenge besonders einfach und zuverlässig mit kapazitiven Mitteln überwachen bzw. bestimmen lässt, und zwar durch Einbeziehung des elektrisch leitfähigen Bandes, z.B. Stahlbandes. Dabei kann es sich um ein Band handeln, das vollständig aus einem elektrisch leitfähigen Material, z. B. aus Stahl besteht. Alternativ lässt sich aber auch ein Band einsetzen, das (lediglich) mit einer leitfähigen Oberfläche ausgerüstet ist, wobei es grundsätzlich ausreichend ist, wenn die (durch das Schmiermittel benetzte) Bandoberfläche elektrisch leitfähig ausgebildet ist. Es werden eine oder mehrere Fühlerplatten in einem vorgegebenen festen Abstand zu dem Band angeordnet, so dass die Fühlerplatte mit dem Band einen Kondensator bildet, dessen Kapazität empfindlich durch die dielektrische Wirkung des Schmiermittels, z.B. Öls, beeinflusst wird. Denn die Permitivität bzw. relative Dielektrizitätskonstante Er des Schmiermittels, z.B. Öls weicht mit einem Wert von etwa 2 sehr deutlich von der der Luft mit einem Wert von etwa 1 ab. Da diese Permitivität aufgrund des Zusammenhangs C=ε × εᵣ × A/d linear in die Kapazität des von Fühlerplatte und Band gebildeten Plattenkondensators eingeht, ist die Kapazität des auf diese Weise mit dem Band (z.B. Pressband einer kontinuierlichen Presse) gebildeten Kondensators ein empfindliches und zuverlässiges Maß für die auf dem Band und folglich innerhalb des Plattenkondensators angeordnete Schmiermittelmenge.

Kapazitive Sensoren, die auf Basis der Veränderung der elektrischen Kapazität eines Kondensators arbeiten, sind zwar aus dem Stand der Technik bekannt, z.B. als Drucksensoren, Abstandssensoren, Näherungsschalter, Spaltsensoren, Wegsensoren oder auch als Feuchtigkeitssensoren. Für den Einsatz in kontinuierlichen Pressen und insbesondere für die Überwachung des Schmierzustandes von mit Schmiermittel beaufschlagten umlaufenden Bändern ist eine solche Technologie jedoch bislang nicht in Betracht gezogen worden.

In besonders vorteilhafter Weise besteht erfindungsgemäß die Möglichkeit, den Schmierzustand des Bandes selektiv bzw. individuell über die Bandbreite zu analysieren bzw. zu überwachen, so dass nicht nur ein über die Breite gemittelter Schmierzustand erfasst werden kann, sondern insbesondere auch eine über die Breite ungleichmäßige Verteilung erfasst wird. Denn in bevorzugter Weiterbildung schlägt die Erfindung vor, dass über die Breite des Bandes nebeneinander mehrere Fühlerplatten angeordnet sind, die mit dem Band nebeneinander mehrere Kondensatoren bilden, die jeweils unterschiedlichen Breitenpositionen des Bandes zugeordnet sind. Dabei besteht z.B. die Möglichkeit, über die Breite des Bandes zumindest fünf Fühlerplatten und folglich fünf Kondensatoren zu realisieren, so dass eine Überwachung des Schmierzustandes in fünf nebeneinander angeordneten Spuren möglich ist. Durch Aufteilung und Anzahl der Spuren kann eine Anpassung an die jeweiligen Gegebenheiten erfolgen, und zwar derart, dass durch eine höhere Anzahl von Spuren eine feinere bzw. selektivere Überwachung des Bandes über die Bandbreite ermöglicht wird.

Interessant ist die Tatsache, dass das Band, z.B. das Pressband einer kontinuierlichen Presse in der Regel ohnehin aus einem elektrisch leitfähigen Material gefertigt ist (z.B. als Stahlband) und dass ein solches Band üblicherweise ohnehin geerdet ist, so dass auf einfache Weise mit den Fühlerplatten ein oder mehrere Kondensatoren für eine kapazitive Schmiermittel-überwachung realisiert werden können. Grundsätzlich kann aber auch ein umlaufendes Band bzw. Pressband eingesetzt werden, das nicht vollständig aus leitfähigem Material besteht, sondern lediglich eine elektrisch leitfähige Bandoberfläche aufweist, die mit dem Schmiermittel benetzt wird.

Optional besteht die Möglichkeit, dass eine oder mehrere Fühlerplatten relativ zu dem Band bewegbar angeordnet sind, und zwar bevorzugt in einer quer zur Plattenebene verlaufenden Richtung. Dabei können sich die Fühlerplatten im Normalbetrieb in einer den gewünschten Abstand zum Band definierenden Arbeitsposition befinden und während des Betriebes - z. B. wenn sich ein Gegenstand auf der Bandoberfläche befindet - aus der Arbeitsposition in eine den Abstand zu dem Band vergrößernde Ausweichposition ausweichen. Damit können Störungen und/oder Beschädigungen zuverlässig vermieden werden, z. B. wenn sich auf dem Band ein Gegenstand unerwünscht befindet und/oder wenn sich auf dem Band größere Mengen von störenden Partikeln, z. B. Holzwerkstoffen befinden. In einem solchen Fall können die Platten aus der Sollposition und folglich aus der Arbeitsposition ausweichen, und zwar in einer quer zur Plattenebene orientierten Ausweichrichtung. Ergänzend kann es vorteilhaft sein, wenn die Fühlerplatten in die Arbeitsposition und folglich Sollposition kraftbeaufschlagt, z. B. federkraftbeaufschlagt sind, so dass die Platten aufgrund eines Störkörpers gegen die Kraft, z. B. Federkraft, ausweichen und anschließend selbsttätig wieder in die Arbeitsposition gelangen, um im Normalbetrieb den gewünschten und vordefinierten Plattenabstand zu gewährleisten, der Messungenauigkeiten vermeidet.

Insbesondere bei einer Ausführungsform mit bewegbaren Fühlerplatten kann es vorteilhaft sein, wenn eine oder mehrere Fühlerplatten eine winkelige oder keilförmige Einlaufkante aufweisen, und zwar an der entgegen der Umlaufrichtung angeordneten, einlaufseitigen Kante der Fühlerplatte, so dass sich im Bereich einer oder mehrerer Fühlerplatten zwischen Fühlerplatte und Band ein sich in der Durchlaufrichtung verjüngender, keilförmiger Einlaufspalt ergibt. Dieses lässt sich z. B. dadurch realisieren, dass die jeweilige Fühlerplatte im Einlaufbereich bzw. an der Einlaufkante einfach angefast ist und folglich eine Einlauffase besitzt. Alternativ können auch abgewinkelte Fühlerplatten oder Fühlerplatten mit einem gekrümmten Einlaufbereich verwendet werden. Eine solche Ausgestaltung mit winkeliger oder keilförmiger Einlaufkante ist insbesondere in Kombination mit den beschriebenen bewegbaren Fühlerplatten vorteilhaft, da auf diese Weise das Ausweichen der Fühlerplatte vereinfacht und damit Störungen vorgebeugt wird.

Insbesondere bei bewegbaren und folglich auslenkbaren Fühlerplatten kann es von Vorteil sein, wenn eine Auslenkung aus einer Arbeitsposition einer Fühlerplatte unmittelbar oder mittelbar von einer Steuereinheit bzw. von der Steuereinheit detektierbar ist. Anhand einer zuweisbaren Bandposition und/oder unter Einberechnung der Umlaufgeschwindigkeit des Bandes ist damit eine gezielte Ausschleusung des im Zusammenhang mit der Auslenkung der Fühlerplatte detektierten Gegenstandes initiierbar.

Dabei ist es im Übrigen vorteilhaft, wenn die Fühlerplatten in einem Bereich der Pressbänder angeordnet sind, indem die Pressbänder möglichst geringen Positionsschwankungen unterliegen, so dass sich der Kondensatorspalt nicht oder nicht nennenswert verändert. Dazu kann es zweckmäßig sein, die Fühlerplatten im Bereich von Rollen innerhalb der Presse anzuordnen, z. B. im

Bereich von Umlenkrollen oder ohnehin in der Presse für das Band vorhandenen Stützrollen. Es besteht auch die Möglichkeit, separate Stützrollen vorzusehen und die Fühlerplatten im Bereich dieser Stützrollen anzuordnen. Die Fühlerplatten können dazu entsprechend dem Bandverlauf um eine der jeweiligen genannten Rollen und dem gewünschten Abstand zum Band gewölbt ausgebildet sein. Je nach Stärke des Bandes kann der hier bevorzugte Bereich jedoch auch bereits bis zu 500 mm oder sogar bis zu 1.500 mm vor oder nach dem aus dem Band und Rolle gebildeten Nip beginnen bzw. enden.

Nach einem weiteren optional realisierbaren Gedanken der Erfindung können mehrere Fühlerplatten in Bandlaufrichtung hintereinander und in der Breitenrichtung versetzt zueinander unter Bildung einer auf die Breitenposition bezogenen Überlappung angeordnet sein. Damit sind wenigstens zwei Fühlerplatten über die Breite des Bandes gesehen überlappend zueinander angeordnet. Dazu kann die eine Fühlerplatte gegenüber der anderen Fühlerplatte in Umlaufrichtung des Bandes vorgezogen oder zurückgesetzt angeordnet sein. Vorteilhaft ist es dabei, wenn die Fühlerplatten dazu an ihren dem Band zugewandten Seiten dreieckige oder trapezförmige Flächen aufweisen.

Aus dem bereits beschriebenen Verhältnis C = ε × εᵣ × A/d lässt sich ableiten, dass es für die Messung dünner Schmierfilmstärken zur Erhaltung eines möglichst genauen Messergebnisses günstig sein kann, wenn d klein ist und wenn A groß ist. Versuche haben ergeben, dass ein als dimensionsloser Wert gebildetes Verhältnis aus Fläche durch Abstand zwischen 100 und 10.000, insbesondere zwischen 500 und 5.000, bevorzugt zwischen 1.000 und 4.000 liegt.

Grundsätzlich ist es von Vorteil, wenn der Abstand d zwischen Band und Fühlerplatte nicht mehr als 50 mm beträgt und je nach Anwendungsfall bevorzugt in einem Bereich zwischen 2 mm und 30 mm, insbesondere zwischen 5 mm und 25 mm ausgebildet ist.

In bevorzugter Weiterbildung ist vorgesehen, dass der oder die Sensoren (jeweils) eine (elektronische) Schaltungsanordnung aufweisen, die mit der jeweiligen Fühlerplatte verbunden ist oder in welche die Fühlerplatte integriert ist und mit der das von der Schmiermittelmenge abhängige Messsignal erzeugbar ist. Bestandteil des Sensors ist folglich nicht nur der Kondensator selbst, sondern eine elektronische Schaltungsanordnung, bei der jedoch auf bekannte Maßnahmen zur Verschaltung von Kondensatoren bzw. Kondensatorplatten im Zuge einer kapazitiven Messung zurückgegriffen werden kann. So kann es sich z.B. bei der Schaltungsanordnung um einen elektronischen Schwingkreis und folglich einen LC-Oszillator handeln, der einerseits von zumindest dem Kondensator (aus Fühlerplatte und Band) und andererseits einer zusätzlichen Spule gebildet wird, wobei die Frequenz des Schwingkreises bzw. des Oszillators als Messsignal von der Kapazität des Kondensators und damit von der innerhalb des Kondensators angeordneten Schmiermittelmenge abhängt. Die durch die elektrische Wirkung des Öls erzeugte Veränderung der Kapazität kann folglich in Form einer Veränderung der Frequenz eines LC-Oszillators erfasst werden, wobei sich die Frequenz des Oszillators verändert, wenn die Ölmenge zwischen Platte und Band kleiner oder größer wird, z.B. kleiner oder größer als die gewünschte Ölmenge wird. Der erfindungsgemäße schmiermittelabhängige bzw. ölabhängige Kondensator wird folglich als frequenzbeeinflussendes Element in einem LC-Oszillator und folglich als frequenzbestimmendes Bauteil eingesetzt. Sofern sich die Ölmenge ändert, ändert sich auch die Frequenz.

Der oder die Sensoren können mit einer (gemeinsamen) oder mit mehreren (einzelnen) Auswerteeinrichtungen verbunden oder ausgerüstet sein, mit denen durch Auswertung des Messsignals ein von dem Messsignal abhängiges und den Schmierzustand repräsentierendes Informationssignal erzeugbar ist. Dazu kann z.B. in der oder den Auswerteeinrichtungen das Messsignal mit einem oder mit mehreren Vergleichswerten oder mit einem oder mehreren Vergleichsintervallen verglichen werden, wobei durch Vergleich des Messsignals mit der oder den Vergleichswerten bzw. Vergleichsintervallen das Informationssignal erzeugbar ist, z.B. bei Überschreiten oder Unterschreiten eines Vergleichswertes oder eines Vergleichsintervalls. Eine solche Auswerteeinrichtung lässt sich z.B. Schaltungstechnisch sehr einfach durch eine grundsätzlich bekannte Filterschaltung realisieren, die bei entsprechender Abweichung ein Informationssignal erzeugt, das z.B. an eine Meldeeinrichtung weitergeleitet werden kann.

Es versteht sich, dass die Schaltungsanordnung des Sensors (in die der Kondensator integriert ist) einerseits und die damit verbundene Auswerteeinrichtung (z.B. Filterschaltung) schaltungstechnisch in einer gemeinsamen Einrichtung bzw. einer gemeinsamen Schaltung kombiniert sein können. Optional besteht aber auch die Möglichkeit, für eine Vielzahl von Sensoren, die jeweils mit einer Schaltungsanordnung ausgerüstet sind, eine gemeinsame Auswerteeinrichtung zur Verfügung zu stellen, die z.B. auch in einen Rechner integriert sein kann. Gleiches gilt für die optional vorgesehene Meldeeinrichtung, die bauteiltechnisch gemeinsam mit der Auswerteeinrichtung ausgestaltet sein kann oder auch von einer separaten Einheit oder gegebenenfalls auch einem Rechner, z.B. Zentralrechner, gebildet werden kann.

Alternativ zu der beschriebenen Schaltungsanordnung in Form eines LC-Oszillators können auch andere grundsätzlich bekannte Schaltungsanordnungen, z.B. PLL-Schaltungen ("phase locked loop") zum Einsatz kommen.

Es besteht die Möglichkeit, dass die Messsignale (z.B. Frequenzen) oder insbesondere die daraus erzeugten Informationssignale (z.B. Unterschreiten einer Schmiervorgabe) an zumindest eine Meldeeinrichtung bzw. ein Meldesystem weitergeleitet werden. Dieses Meldesystem kann z.B. einer optischen und/oder akustischen Anzeige einer fehlerhaften Schmierung dienen, indem z.B. aufgrund eines Informationssignals, das eine Überschmierung oder eine Unterschmierung repräsentiert, eine Warnmeldung erzeugt wird. Auf der Basis einer solchen Warnmeldung kann z.B. ein Operateur in den Prozess eingreifen. Alternativ besteht aber auch die Möglichkeit einer automatisierten Reaktion im Sinne einer Steuerung oder Regelung. In diesem Fall besteht z.B. die Möglichkeit, dass die Schaltungsanordnungen und/oder bevorzugt die damit verbundenen Auswerteeinrichtungen mit einer (gemeinsamen) Steuereinrichtung verbunden sind, mit der in Abhängigkeit von den Messsignalen bzw. den Informationssignalen der Schmierprozess automatisiert beeinflusst werden kann, und zwar bevorzugt im Sinne einer Steuerung oder einer Regelung.

Denn die erfindungsgemäße Presse mit einer Vorrichtung zur Überwachung des Schmierzustandes weist nicht nur die beschriebenen Überwachungseinrichtungen auf, sondern auch zumindest eine Auftragsvorrichtung, mit der Schmiermittel auf das Band aufbringbar ist, und zwar entweder unmittelbar auf das Band oder mittelbar, z.B. über die umlaufenden Rollstangen. Bei einer solchen Auftragsvorrichtung kann es sich z.B. um eine grundsätzlich bekannte Bedüsungsvorrichtung für ein flüssiges Schmiermittel (z.B. Öl) handeln. Besonders bevorzugt ist eine solche Auftragsvorrichtung für eine breitenselektive Beaufschlagung des Bandes eingerichtet, so dass mit der Auftragsvorrichtung gezielt bestimmte Breitenbereiche in unterschiedlichen Mengen mit Schmierstoff beaufschlagbar sind. Es ist folglich möglich, die beschriebene Steuereinrichtung mit einer Auftragsvorrichtung zu verbinden, so dass mit der Auftragsvorrichtung unter Berücksichtigung der ermittelten Messsignale bzw. Informationssignale eine Steuerung oder auch eine Regelung des Schmiermittelauftrags erfolgen kann. Besonders bevorzugt gelingt dieses auch breitenselektiv. Wird z.B. mit den Sensoren festgestellt, dass in einem bestimmten Breitenbereich (d.h. einer Spur) des Bandes eine Mangelschmierung oder eine Überschmierung vorliegt, so kann mit Hilfe der Steuervorrichtung automatisiert über die Auftragsvorrichtung Einfluss genommen und das Schmiermittelprofil über die Breite beeinflusst werden.

Die Erfindung betrifft im Übrigen nicht nur eine kontinuierlich arbeitende Presse mit einer Vorrichtung zur Überwachung des Schmierzustandes, sondern auch ein entsprechendes Verfahren zur Überwachung des Schmierzustandes in einer kontinuierlich arbeitenden Presse, das mit einer Vorrichtung der beschriebenen Art durchgeführt wird. Das Verfahren ist dadurch gekennzeichnet, dass mit dem oder mit den kapazitiven Sensoren ein von der Schmiermittelmenge abhängiges Messsignal erzeugt und daraus der Schmierzustand oder eine Abweichung des Schmierzustandes von einem oder mehreren Vergleichswerten ermittelt wird. Aus dem Messsignal kann z.B. mit der Auswerteeinrichtung in der beschriebenen Weise ein Informationssignal mit einer den Schmierzustand repräsentierenden Information erzeugt werden, die z.B. an eine Meldeeinrichtung und/oder an eine Steuervorrichtung übermittelt wird. Auf diese Weise besteht die Möglichkeit, in Abhängigkeit von dem Messsignal oder dem Informationssignal eine Auftragsvorrichtung zum Aufbringen von Schmiermittel auf das Band mit einer Steuereinrichtung zu steuern oder zu regeln. In der beschriebenen Weise kann dabei mit mehreren, nebeneinander über die Breite des Bandes verteilten Sensoren der Schmierzustand des Bandes breitenselektiv für mehrere einzelne Breitenpositionen des Bandes überwacht werden.

Die erfindungsgemäße kontinuierlich arbeitende Presse weist zumindest ein oberes endlos umlaufendes Band (Pressband) und ein unteres endlos umlaufendes Band (Pressband) auf, wobei das Pressgut durch den Pressspalt zwischen dem oberen und dem unteren Band hindurchgeführt wird. Bevorzugt handelt es sich um eine Pressvorrichtung, bei der das Pressgut unter Anwendung von Druck und/oder Wärme zu einer Platte bzw. einem endlosen Plattenstrang verpresst wird. Alternativ kann es sich bei einer solchen Presse auch um eine Vorwärmeinrichtung handeln, die z.B. in einem kontinuierlichen Pressprozess der Vorwärmung des Pressgutes dient, bevor dieses in eine kontinuierlich arbeitende Presse zur Herstellung der eigentlichen Platte einläuft. Bevorzugt werden solche kontinuierlich arbeitenden Pressen nach Art einer Doppelbandpresse erfasst, bei denen die Pressbänder unter Zwischenschaltung von Wälzkörpern, z.B. von Rollstangen oder Rollstäben, an der jeweiligen Pressenplatte abgestützt sind. Die Erfindung betrifft jedoch alternativ auch Pressen mit umlaufenden Pressbändern anderer Bauart, z.B. Kalanderpressen. Stets ist eine solche Presse mit einer Vorrichtung zur Überwachung des Schmierzustandes der beschriebenen Art ausgerüstet, d.h., die Erläuterungen zur Schmierung und Überwachung des Bandes betreffen bei einer Presse bevorzugt das jeweilige obere Pressband und/oder das jeweilige untere Pressband. Gegenstand einer solchen Presse ist auch eine Auftragsvorrichtung, mit der ein Schmiermittel auf das obere und/oder das untere Band (unmittelbar oder mittelbar) aufbringbar ist. Die erfindungsgemäße Presse ist folglich dadurch gekennzeichnet, dass die Presse mit einer Vorrichtung zur Überwachung des Schmierzustandes der beschriebenen Art ausgerüstet ist.

Im Folgenden wird die Erfindung anhand einer lediglich ein Ausführungsbeispiel darstellenden Zeichnung näher erläutert. Es zeigen
- Fig. 1: schematisch vereinfacht eine kontinuierlich arbeitende Presse mit einer Vorrichtung zur Überwachung des Schmierzustandes der Pressbänder,
- Fig. 2: schematisch vereinfacht eine Vorrichtung zur Überwachung des Schmierzustandes innerhalb einer Presse nach Fig. 1 und
- Fig. 3: eine Schaltungsanordnung einer Vorrichtung nach Fig. 2.

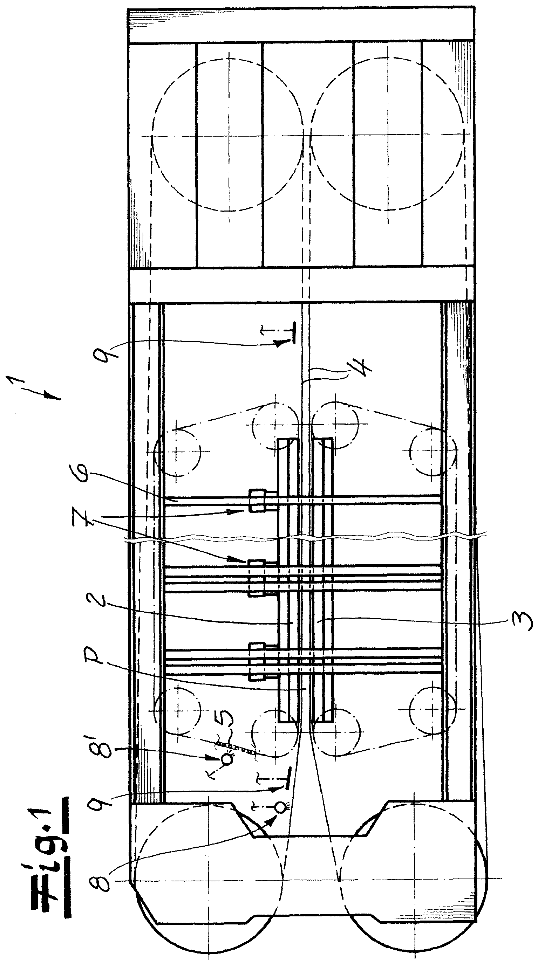

In Fig. 1 ist eine kontinuierlich arbeitende Presse 1 dargestellt, die z.B. zum Verpressen von Pressgutmatten zu Pressgutplatten im Zuge der Herstellung von Spanplatten, Faserplatten oder anderen Holzwerkstoffplatten geeignet und bestimmt ist. Die kontinuierliche Presse 1 weist in ihrem grundsätzlichen Aufbau ein Pressenoberteil mit einer oberen beheizbaren Pressenplatte 2 und ein Pressenunterteil mit einer unteren beheizbaren Pressenplatte 3 auf. Die beheizbaren Pressenplatten 2, 3 werden auch als Heizplatten bezeichnet. Im Pressenoberteil sowie im Pressenunterteil sind endlos umlaufende Bänder 4 geführt, die auch als Pressbänder 4 (oder einfach als Bänder 4) bezeichnet werden und z.B. aus Stahl gefertigt sind. Zwischen den Pressbändern 4 wird ein Pressspalt P gebildet, durch den das Pressgut hindurchgeführt wird. Die Pressbänder 4 sind unter Zwischenschaltung von Rollstäben bzw. Rollstangen 5 gegen die Pressenplatten 2, 3 abgestützt. Die Rollstäbe 5 sind dabei z.B. an Rollstabketten geführt, die nicht im Detail dargestellt sind. Das Pressgut wird innerhalb der Presse unter Anwendung von Druck und Wärme zu einem aus der Presse auslaufenden Plattenstrang verpresst. Die dazu erforderlichen Presskräfte werden mit Kraftmitteln, insbesondere mit hydraulischen Presszylindern 7 aufgebracht, mit denen z.B. die obere Pressenplatte 2 oder die untere Pressenplatte 3 beaufschlagt wird. Diese Presszylinder 7 sind am Pressengestell, z.B. an dessen Pressenrahmen 6 abgestützt. Die Fig. 1 zeigt dabei lediglich beispielhaft eine Oberkolbenpresse, bei der die obere Pressenplatte 2 mit den Presszylindern 7 beaufschlagt wird.

Die Pressbänder werden mit einem Schmiermittel beaufschlagt, insbesondere mit einem flüssigen Schmiermittel, z.B. mit Öl. Dabei ist in Fig. 1 die Möglichkeit angedeutet, das jeweilige Pressband unmittelbar mit dem Schmiermittel zu beaufschlagen, z.B. durch eine geeignete Auftragsvorrichtung 8, die z.B. als sich quer zur Bandlaufrichtung über die Bandbreite erstreckende Bedüsungsvorrichtung ausgebildet sein kann. Alternativ oder ergänzend kann jedoch eine in Fig. 1 ebenfalls angedeutete Auftragsvorrichtung 8' vorgesehen sein, die die umlaufenden Rollstangen 5 beaufschlagt, so dass über die Rollstangen eine mittelbare Beaufschlagung des Pressbandes mit dem Schmiermittel erfolgt. Dabei zeigt Fig. 1 lediglich die Schmierung des oberen Bandes. Selbstverständlich sind entsprechende Maßnahmen auch im Bereich des unteren Bandes vorgesehen. Stets erfolgt die Beaufschlagung der dem Pressgut abgewandten "inneren" Oberfläche des jeweiligen Pressbandes 4.

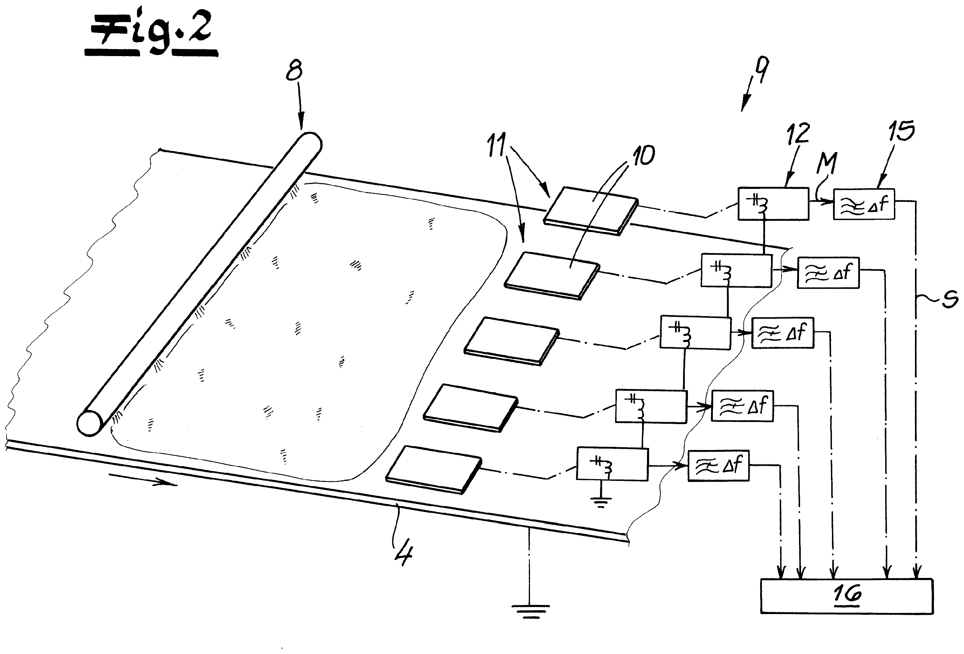

Die Presse 1 ist mit einer Vorrichtung zur Überwachung des Schmierzustandes der mit dem Schmiermittel beaufschlagten, umlaufenden Bänder ausgerüstet. Diese Vorrichtung ist in Fig. 2 dargestellt. Sie weist mehrere im Bereich des Bandes angeordnete und über die Bandbreite verteilte Sensoren 9 auf, mit denen jeweils zumindest ein von der jeweiligen Schmiermittelmenge auf dem Band abhängiges Messsignal M erzeugt wird. Erfindungsgemäß sind diese Sensoren 9 als kapazitiv arbeitende Sensoren ausgebildet, die jeweils zumindest eine in einem Abstand zum Band 4 angeordnete Fühlerplatte 10 aufweisen, die mit dem Band 4 jeweils einen Kondensator 11 bilden, dessen Kapazität von der auf dem Band angeordneten Schmiermittelmenge abhängt. Dabei ist in Fig. 2 erkennbar, dass über die Breite des Bandes 4 nebeneinander mehrere Fühlerplatten 10 angeordnet sind, die mit dem Band gemeinsam mehrere nebeneinander angeordnete Kondensatoren 11 bilden, die unterschiedlichen Breitenpositionen des Bandes zugeordnet sind. Im Ausführungsbeispiel sind fünf nebeneinander angeordnete Fühlerplatten 10 und folglich fünf nebeneinander angeordnete Sensoren dargestellt, so dass eine Überwachung des Schmierzustandes in fünf einzelnen Spuren auf dem Band möglich ist. Die Fühlerplatten 10 sind in einem Abstand d von dem Band 4 angeordnet.

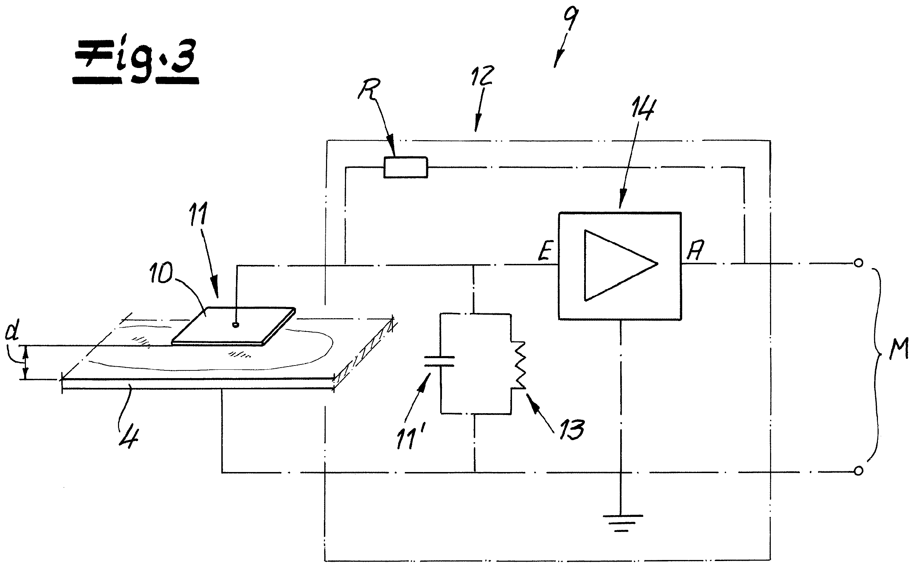

Die Sensoren 9 weisen jeweils eine Schaltungsanordnung 12 auf, die mit der jeweiligen Fühlerplatte 10 verbunden ist bzw. in welche die jeweilige Fühlerplatte 10 integriert ist (vgl. z.B. Fig. 3). Mit dieser Schaltungsanordnung 12 kann (für die jeweilige Breitenposition) ein von der Schmiermittelmenge abhängiges Messsignal M erzeugt werden. In dem dargestellten Ausführungsbeispiel ist diese Schaltungsanordnung 12 als Schwingkreis und folglich als LC-Oszillator ausgebildet, welche einerseits den Kondensator 11 und andererseits eine Spule 13 aufweisen. In Fig. 3 ist dabei eine Variante angedeutet, bei der zunächst ein Basisschwingkreis mit der Spule 13 und einem unmittelbar zugeordneten Kondensator 11' vorgesehen ist, dem der Kondensator 11 aus Fühlerplatte 10 und Band 4 parallel geschaltet ist, so dass sich die Kapazitäten aus 11 und 11' addieren. Ferner sind ein Verstärker 14 mit Eingang E und Ausgang A sowie ein Widerstand R dargestellt. Der Ausgang dieser Schaltungsanordnung 12 gemäß Fig. 3 liefert ein Frequenzsignal als Messsignal, d.h., die Frequenz des Schwingkreises hängt von der Kapazität des Kondensators 11 und damit von der innerhalb des Kondensators 11 auf dem Band 4 angeordneten Schmiermittelmenge ab. Die Frequenz des Oszillators verändert sich folglich, wenn die Ölmenge zwischen Platte und Band kleiner oder größer wird. Der schmiermittelabhängige Kondensator 11 wird folglich in einem LC-Oszillator als frequenzbestimmendes Bauteil eingesetzt, so dass die Frequenz als Messsignal M zur Verfügung steht.

Die Sensoren 9 (bzw. deren Schaltungen 12) sind mit einer oder mit mehreren Auswerteeinrichtungen 15 verbunden, die im Ausführungsbeispiel als Filterschaltungen 15 ausgebildet sind. Sie sind in den Figuren schematisch vereinfacht als getrennte Komponenten dargestellt, können jedoch selbstverständlich auch schaltungstechnisch untereinander und/oder mit den Schaltungen 12 kombiniert sein. Mit den Auswerteeinrichtungen 15 werden durch Auswertung des Messsignals jeweils die von dem Messsignal M abhängigen und den Schmierzustand repräsentierenden Informationssignale S erzeugt. Dazu können die Messsignale M in den Auswerteeinrichtungen 15 jeweils mit einem oder mit mehreren Vergleichswerten oder mit einem Vergleichsintervall verglichen werden und in Abhängigkeit von dem Ergebnis des Vergleichs kann das Informationssignal S erzeugt werden, z.B. bei Überschreiten oder bei Unterschreiten eines Vergleichswertes oder eines Vergleichsintervalls. So besteht z.B. die Möglichkeit, dass ein Informationssignal S erzeugt und an eine Meldeeinrichtung 16 übermittelt wird, wenn für die jeweilige Breitenposition eine Unterschmierung oder eine Überschmierung festgestellt wird. Schaltungstechnisch lässt sich dieses z.B. durch eine Filterschaltung realisieren, d.h., das Informationssignal wird erzeugt, wenn die gemessene Frequenz von einer vorgegebenen Frequenz abweicht oder aus einem vorgegebenen Frequenzbereich fällt. Dabei ist in den Figuren eine einfache Variante angedeutet, bei der über die Meldeeinrichtung 16 z.B. eine Meldung bzw. ein optisches und/oder akustisches Warnsignal erzeugt wird, auf das z.B. ein Operateur beim Betrieb der Presse reagieren kann.

Optional besteht aber auch die Möglichkeit, die beschriebene Vorrichtung mit einer Steuereinrichtung zu kombinieren bzw. die Messsignale M oder die Informationssignale S einer Steuereinrichtung zuzuführen, mit der die Auftragsvorrichtung 8, 8' zum Aufbringen des Schmiermittels auf das Pressband 4 steuerbar oder regelbar ist. Gegebenenfalls kann ein geschlossener Regelkreis realisiert werden. Stets besteht die Möglichkeit, den Schmiermittelauftrag automatisiert in Abhängigkeit von den mit der Messvorrichtung erzeugten Überwachungsergebnissen zu steuern oder zu regeln.

Dabei ist es im Übrigen vorteilhaft, wenn die Fühlerplatten 10 in einem Bereich der Pressbänder angeordnet sind, in dem die Pressbänder möglichst geringen Positionsschwankungen unterliegen, so dass sich der Kondensatorspalt nicht oder nicht nennenswert verändert. Dazu kann es zweckmäßig sein, die Fühlerplatten im Bereich von Rollen innerhalb der Presse anzuordnen, z.B. im Bereich von Umlenkrollen oder ohnehin in der Presse für das Band vorhandenen Stützrollen. Es besteht auch die Möglichkeit, separate Stützrollen vorzusehen und die Fühlerplatten im Bereich dieser Stützrollen anzuordnen. Einzelheiten sind nicht dargestellt.

Im Übrigen sind die Fühlerplatten 10 in den Ausführungsbeispielen in einem fest vorgegebenen bzw. fest definierten Abstand d zu dem Band 4 angeordnet. Optional besteht die Möglichkeit, dass sich dieser definierte Abstand d auf eine Sollposition bzw. Arbeitsposition der Fühlerplatten bezieht und dass diese Fühlerplatten aus dieser Arbeitsposition in einer quer zur Plattenebene bzw. Bandebene orientierten Querrichtung bewegbar und folglich auslenkbar sind, so dass die Platten z. B. bei Störkörpern, Fremdkörpern oder dergleichen unter Aufweitung des Spaltes ausweichen können, z. B. gegen die Kraft einer Feder oder dergleichen, so dass sie anschließend wieder selbsttätig in die Arbeitsposition mit dem vorgesehenen Spalt d gelangen. Einzelheiten sind in den Figuren nicht dargestellt.

## Patentansprüche

1. Kontinuierlich arbeitende Presse (1), mit einem oberen endlos umlaufenden Band (4) und einem unteren endlos umlaufenden Band (4),
wobei Pressgut durch den Pressspalt zwischen dem oberen und dem unteren Band (4) hindurchgeführt und unter Anwendung von Druck und/oder Wärme zu einer Platte oder einem endlosen Plattenstrang verpresst wird,
mit zumindest einer Auftragsvorrichtung (8, 8'), mit der ein Schmiermittel auf das obere Band (4) und/oder auf das untere Band (4) unmittelbar oder mittelbar aufbringbar ist,
und mit einer Vorrichtung zur Überwachung des Schmierzustandes des mit dem Schmiermittel beaufschlagten, umlaufenden Bandes (4) mit einem oder mehreren, im Bereich des Bandes angeordneten Sensoren (9), mit denen zumindest ein von der Schmiermittelmenge auf dem Band (4) abhängiges Messsignal (M) erzeugbar ist,
**dadurch gekennzeichnet, dass**
die Sensoren (9) als kapazitiv arbeitende Sensoren ausgebildet sind, die jeweils zumindest eine in einem Abstand zum Band (4) angeordnete Fühlerplatte (10) aufweisen, die mit dem Band (4) jeweils einen Kondensator (11) bildet, dessen Kapazität von der auf dem Band (4) angeordneten Schmiermittelmenge abhängt.

2. Kontinuierlich arbeitende Presse nach Anspruch 1, **dadurch gekennzeichnet, dass** über die Breite des Bandes (4) nebeneinander mehrere Fühlerplatten (10) angeordnet sind, die mit dem Band mehrere nebeneinander angeordnete Kondensatoren (11) bilden, die unterschiedlichen Breitenpositionen des Bandes (4) zugeordnet sind.

3. Kontinuierlich arbeitende Presse nach Anspruch 1 oder 2, **dadurch gekennzeichnet, dass** eine oder mehrere Fühlerplatten (10) relativ zu dem Band (4) bewegbar angeordnet sind und/oder dass ein oder mehrere Fühlerplatten (10) eine winkelig oder keilförmig ausgebildete Einlaufkante aufweisen.

4. Kontinuierlich arbeitende Presse nach Anspruch 2 oder 3, **dadurch gekennzeichnet, dass** mehrere Fühlerplatten (10) in Bandlaufrichtung hintereinander und in Breitenrichtung versetzt zueinander unter Bildung einer auf die Breitenrichtung bezogenen Überlappung zweier benachbarter Fühlerplatten angeordnet sind.

5. Kontinuierlich arbeitende Presse nach einem der Ansprüche 1 bis 4, **dadurch gekennzeichnet, dass** der Abstand einer oder mehrerer Fühlerplatten zum Band weniger als 50 mm, z. B. 2 mm bis 40 mm, vorzugsweise 2 mm bis 30 mm, besonders bevorzugt 5 mm bis 25 mm beträgt.

6. Kontinuierlich arbeitende Presse nach einem der Ansprüche 1 bis 5, **dadurch gekennzeichnet, dass** der oder die Sensoren (9) jeweils eine Schaltungsanordnung (12) aufweisen, die mit der Fühlerplatte (10) verbunden ist oder in die Fühlerplatte (10) integriert ist und mit der das von der Schmiermittelmenge abhängige Messsignal (M) erzeugbar ist.

7. Kontinuierlich arbeitende Presse nach Anspruch 6, **dadurch gekennzeichnet, dass** die Schaltungsanordnung (12) als elektrische Schaltungsanordnung ausgebildet ist, mittels derer Verschiebungsströme und/oder ein Ladungsträgerausgleich zwischen Fühlerplatte und Band messbar ist bzw. messbar sind.

8. Kontinuierlich arbeitende Presse nach Anspruch 7, **dadurch gekennzeichnet, dass** die Schaltungsanordnung (12) als Schwingkreis (LC-Oszillator) ausgebildet ist, welche den Kondensator (11) und zusätzlich eine Spule (13) aufweist, wobei die Frequenz des Schwingkreises als Messsignal (M) von der Kapazität des Kondensators (11) und damit von der innerhalb des Kondensators (11) angeordneten Schmiermittelmenge abhängt.

9. Kontinuierlich arbeitende Presse nach einem der Ansprüche 1 bis 8, **dadurch gekennzeichnet, dass** der oder die Sensoren (9) mit einer oder mehreren Auswerteeinrichtungen (15), z.B. Filterschaltungen, verbunden oder ausgerüstet sind, mit denen durch Auswertung des Messsignals (M) ein von dem Messsignal (M) abhängiges und dem Schmierzustand repräsentierendes Informationssignal (S) erzeugbar ist.

10. Kontinuierlich arbeitende Presse nach Anspruch 9, **dadurch gekennzeichnet, dass** in der oder den Auswerteeinrichtungen (15) das Messsignal (M) mit einem oder mit mehreren Vergleichswerten oder einem Vergleichsintervall verglichen wird und dass in Abhängigkeit von dem Ergebnis des Vergleichs das Informationssignal (S) erzeugbar ist, z.B. bei Überschreiten oder Unterschreiten eines Vergleichswertes oder eines Vergleichsintervalls.

11. Kontinuierlich arbeitende Presse nach Anspruch 9 oder 10, **dadurch gekennzeichnet, dass** das oder die Messsignale (M) oder das oder die Informationssignale (S) an zumindest eine Meldeeinrichtung (16) oder an eine Steuereinrichtung übermittelbar sind, wobei mit der Meldeeinrichtung (16), z.B. eine Abweichung von einem vorgegebenen Schmierzustand anzeigbar ist oder wobei mit der Steuereinrichtung die Auftragsvorrichtung (8, 8') für das Schmiermittel steuerbar ist.

12. Kontinuierlich arbeitende Presse nach einem der Ansprüche 9 bis 11, **dadurch gekennzeichnet, dass** mit der Auftragsvorrichtung (8, 8') Schmiermittel auf das Band (4) breitenselektiv aufbringbar ist, wobei die Auftragsvorrichtung (8, 8') vorzugsweise mit einer Steuereinrichtung in Abhängigkeit von einem oder mehreren Messsignalen (M) oder einem oder mehreren Informationssignalen (S) steuerbar ist.

13. Kontinuierlich arbeitende Presse nach einem der Ansprüche 1 bis 12, **dadurch gekennzeichnet, dass** das Band (4) um eine oder um mehrere Umlenkrollen (17) geführt ist, wobei die Fühlerplatten (10) im Bereich einer Umlenkrolle (17) oder im Bereich einer das Band stützenden Stützrolle angeordnet sind.

14. Verfahren zur Überwachung des Schmierzustandes eines mit einem Schmiermittel beaufschlagten, umlaufenden Bandes (4), in einer Presse nach einem der Ansprüche 1 bis 13,
wobei mit einem oder mehreren, im Bereich des Bandes angeordneten Sensoren (9) zumindest ein von der Schmiermittelmenge auf dem Band (4) abhängiges Messsignal (M) erzeugt wird,
**dadurch gekennzeichnet, dass** mit einem oder mit mehreren kapazitiven Sensoren (9) ein von der Schmiermittelmenge abhängiges Messsignal (M) erzeugt und daraus der Schmierzustand oder eine Abweichung des Schmierzustandes von einem oder mehreren Vergleichswerten oder einem Vergleichsintervall ermittelt wird.

15. Verfahren nach Anspruch 14, **dadurch gekennzeichnet, dass** aus dem Messsignal (M) mit einer Auswerteeinrichtung (15) ein Informationssignal (S) mit einer den Schmierzustand repräsentierenden Information erzeugt wird, welche z.B. an eine Meldeeinrichtung (16) oder an eine Steuereinrichtung übermittelt wird.

16. Verfahren nach Anspruch 14 oder 15, **dadurch gekennzeichnet, dass** mit mehreren, nebeneinander über die Breite des Bandes (4) verteilten Sensoren (9) der Schmierzustand des Bandes (4) breitenselektiv für mehrere einzelne Breitenpositionen des Bandes (4) überwacht wird.

17. Verfahren nach Anspruch 15 oder Anspruch 16, wenn der letztere von Anspruch 15 abhängig ist, **dadurch gekennzeichnet,**
**dass** in Abhängigkeit von dem Messsignal (M) oder von dem Informationssignal (S) die Auftragsvorrichtung (8, 8') zum Aufbringen von Schmiermittel auf das Band (4) mit einer Steuereinrichtung gesteuert oder geregelt wird.

## Claims

1. A continuously operating press (1) with an upper, continuously circulating belt (4) and a lower continuously circulating belt (4),
wherein pressing material is passed through the press gap between the upper and lower belt (4) and with the application of pressure and/or heat is pressed to form a board or a continuous board sections,
with at least one application device (8, 8') with which lubricant can be directly or indirectly applied to the upper belt (4) and/or to the lower belt (4),
and with a device for monitoring the lubrication status of the circulating belt (4), to which lubricant is applied, with one or more sensors (9) which are arranged in the area of the belt and with which a measuring signal (M) that is dependent on the amount of lubricant on the belt (4) can be generated,
**characterised in that**
the sensors (9) are designed as capacitively operating sensors, which each have at least one sensor plate (10) arranged at a distance from the belt (4), which each, with the belt (4), form a capacitor (11), the capacitance of which depends on the amount of lubricant arranged on the belt (4).

2. The continuously operating press according to claim 1, **characterised in that** arranged next to each other over the width of the belt (4) are several sensor plates (10), which with the belt form several capacitors (11) arranged next to each other which are assigned to different width positions of the belt (4).

3. The continuously operating press according to claims 1 or 2, **characterised in that** one or more sensor plates (10) are arranged movably relative to the belt (4) and/or **in that** one or more sensor plates (10) have an angular or wedge-shaped inlet edge.

4. The continuously operating press according to claim 2 or 3, **characterised in that** several sensor plates (10) are arranged one behind the other in the direction of movement of the belt and offset with regard to each other in the width direction, forming an overlap of two neighbouring sensor plates in relation to the width direction.

5. The continuously operating press according to any one of claims 1 to 4, **characterised in that** the distance of one or more sensor plates from belt is less than 50 mm, e.g. 2 mm to 40 mm, preferably 2 mm to 30 mm, particularly preferably 5 mm to 25 mm.

6. The continuously operating press according to any one of claims 1 to 5, **characterised in that** the sensor or the sensors (9) each has/have a circuit arrangement (12) that is connected to the sensor plate (10) or is integrated into the sensor plate (10) and with which the measuring signal (M) dependent on the amount of lubricant can be generated.

7. The continuously operating press according to claim 6, **characterised in that** the circuit arrangement (12) is configured as an electrical circuit arrangement, by means of which displacement currents and/or a charge carrier equalisation between the sensor plate and belt is/are measurable.

8. The continuously operating press according to claim 7, **characterised in that** the circuit arrangement (12) is configured as an oscillating circuit (LC oscillator) which comprises the capacitor (11) and also a coil (13), wherein the frequency of the oscillating circuit as the measuring signal (M) depends on the capacitance of the capacitor (11) and therefore on the amount of lubricant arranged within the capacitor (11).

9. The continuously operating press according to any one of claims 1 to 8, **characterised in that** the sensor(s) (9) is/are connected to or fitted with one or more evaluation devices (15), e.g. filter circuits, with which, through evaluation of the measuring signal (M), an information signal (S) which is dependent on the measuring signal (M) and represents the lubrication status can be generated.

10. The continuously operating press according to claim 9, **characterised in that** in the evaluation device(s) (15) the measuring signal (M) is compared with one or more reference values and **in that** as a function of the result of the comparison, the information (S) can be generated, e.g. on exceeding or falling below a reference value or reference interval.

11. The continuously operating press according to claim 9 or 10, **characterised in that** the measuring signal(s) M or the information signal(s) (S) can be transmitted to a signalling device (16) or to a control device, wherein with the signalling device (16), a deviation from a predetermined lubrication status, for example, can be indicated, or wherein with the control device the application device (8, 8') for the lubricant can be controlled.

12. The continuously operating press according to any one of claims 9 to 11, **characterised in that** with the application device (8, 8'), lubricant can be applied to the belt (4) in a width selective manner, wherein the application device (8, 8') is preferably controllable with a control device as a function of one or more measuring signals (M) or one or more information signals (S) .

13. The continuously operating press according to any one of claims 1 to 12, **characterised in that** the belt (4) is guided around one or more pulleys (17), wherein the sensor plates (10) are arranged in the area of a pulley (17) or in the area of a support roller supporting the belt.

14. A method of monitoring the lubrication status of a circulating belt (4), to which lubricant is applied, in a press according to any one of claims 1 to 13,
wherein with one or more sensors (9) arranged in the area of the belt, at least one measuring signal (M) dependent on the amount of lubricant on the belt (4) is generated,
**characterised in that** with one or more capacitive sensors (9) a measuring signal (M) dependent on the amount of lubricant is generated and from this the lubrication status or a deviation of the lubrication status from one or more reference values or a reference interval is determined.

15. The method according to claim 14, **characterised in that** with an evaluation device (15), from the measuring signal (M), an information signal (S) with information representing the lubrication status is generated which is transmitted to a signalling device (16) or to a control device, for example.

16. The method according to claim 14 or 15, **characterised in that** with a plurality of sensors (9) distributed next to each other over the width of the belt (4), the lubrication status of the belt (4) is monitored in a width-selective manner for several individual width positions of the belt (4).

17. The method according to claim 15 or claim 16, if the latter is dependent on claim 15, **characterised in that** as a function of the measuring signal (M) or of the information signal (S), the application device (8, 8') for applying lubricant to the belt (4) can be controlled or regulated.

## Revendications

1. Presse en continu (1) avec une bande supérieure (4) circulant en continu et une bande inférieure (4) circulant en continu,
sachant que le produit à presser est passé à travers l'interstice de pressage entre la bande supérieure et la bande inférieure (4) et est comprimé en un panneau ou une ligne de panneaux continue en utilisant de la pression et/ou de la chaleur,
avec au moins un dispositif d'application (8, 8') avec lequel un lubrifiant peut être appliqué directement ou indirectement sur la bande supérieure (4) et/ou sur la bande inférieure (4),
et avec un dispositif pour contrôler l'état de lubrification de la bande (4) circulant, recevant du lubrifiant avec un ou plusieurs capteurs (9) disposés à proximité de la bande avec lesquels au moins un signal de mesure (M) fonction de la quantité de lubrifiant sur la bande (4) peut être produit,
**caractérisée en ce que**
les capteurs (9) sont constitués sous la forme de capteurs à fonctionnement capacitif, qui comportent respectivement au moins une plaque de détection (10) disposée à une distance de la bande (4), qui forme avec la bande (4) respectivement un condensateur (11), dont la capacité dépend de la quantité de lubrifiant disposée sur la bande (4).

2. Presse en continu selon la revendication 1, **caractérisée en ce que** plusieurs plaques de détection (10) sont disposées les unes à côté des autres sur la largeur de la bande (4), qui forment avec la bande plusieurs condensateurs (11) disposés les uns à côté des autres, qui sont attribués à différentes positions de largeur de la bande (4).

3. Presse en continu selon la revendication 1 ou 2, **caractérisée en ce qu**'une ou plusieurs plaques de détection (10) sont disposées mobiles par rapport à la bande (4) et/ou en **ce qu**'une ou plusieurs plaques de détection (10) comportent un bord d'entrée constitué de forme angulaire ou en forme de coin.

4. Presse en continu selon la revendication 2 ou 3, **caractérisée en ce que** plusieurs plaques de détection (10) sont disposées les unes derrière les autres dans la direction de marche de la bande et dans le sens de la largeur décalées les unes par rapport aux autres en formant un chevauchement de deux plaques de détection voisines par rapport au sens de la largeur.

5. Presse en continu selon l'une quelconque des revendications 1 à 4, **caractérisée en ce que** l'intervalle entre une ou plusieurs plaques de détection et la bande est inférieur à 50 mm, par ex. de 2 mm à 40 mm, de préférence de 2 mm à 30 mm, en particulier de préférence de 5 mm à 25 mm.

6. Presse en continu selon l'une quelconque des revendications 1 à 5, **caractérisée en ce que** le ou les capteurs (9) comporte(nt) respectivement un montage de circuit (12), qui est relié à la plaque de détection (10) ou est intégré dans la plaque de détection (10) et avec lesquels le signal de mesure (M) dépendant de la quantité de lubrifiant peut être produit.

7. Presse en continu selon la revendication 6, **caractérisée en ce que** le montage de circuit (12) est constitué sous la forme d'un montage de circuit électrique au moyen duquel les courants de déplacement et/ou une compensation de porteur de charge de celui-ci peut ou peuvent être mesuré (s) entre la plaque de détection et la bande.

8. Presse en continu selon la revendication 7, **caractérisée en ce que** le montage de circuit (12) est constitué sous la forme d'un circuit oscillant (oscillateur LC), lequel comporte le condensateur (11) et en plus une bobine (13), sachant que la fréquence du circuit oscillant dépend en tant que signal de mesure (M) de la capacité du condensateur (11) et de ce fait de la quantité de lubrifiant disposée à l'intérieur du condensateur (11).

9. Presse en continu selon l'une quelconque des revendications 1 à 8, **caractérisée en ce que** le ou les capteurs (9) est/sont relié(s) ou équipé(s) d'un ou plusieurs systèmes d'évaluation (15), par ex. circuits de filtrage, avec lesquels un signal d'information (S) dépendant du signal de mesure (M) et représentant l'état de lubrification peut être produit en interprétant le signal de mesure (M).

10. Presse en continu selon la revendication 9, **caractérisée en ce que** le signal de mesure (M) peut être comparé dans le ou les système(s) d'évaluation (15) à une ou plusieurs valeurs de comparaison ou à un intervalle de comparaison et **en ce qu'**en fonction du résultat de la comparaison, le signal d'information (S) peut être produit, par ex. en dépassant au-dessus ou en dessous une valeur de comparaison ou un intervalle de comparaison.

11. Presse en continu selon la revendication 9 ou 10, **caractérisée en ce que** le ou les signaux de mesure (M) ou le ou les signaux d'information (S) peuvent être transmis à au moins un système de signalisation (16) ou à un système de commande, sachant qu'avec le système de signalisation (16), un écart par ex. par rapport à un état de lubrification prédéfini, peut être affiché ou sachant qu'avec le système de commande, le dispositif d'application (8, 8') peut être commandé pour le lubrifiant.

12. Presse en continu selon l'une quelconque des revendications 9 à 11, **caractérisée en ce qu'**avec le dispositif d'application (8, 8') du lubrifiant peut être appliqué de façon sélective en largeur sur la bande (4), sachant que le dispositif d'application (8, 8') peut être commandé de préférence avec un système de commande en fonction d'un ou plusieurs signaux de mesure (M) ou d'un ou plusieurs signaux d'information (S).

13. Presse en continu selon l'une quelconque des revendications 1 à 12, **caractérisée en ce que** la bande (4) est guidée autour d'un ou plusieurs rouleaux de renvoi (17), sachant que les plaques de détection (10) sont disposées à proximité d'un rouleau de renvoi (17) ou à proximité d'un rouleau de support soutenant la bande.

14. Procédé destiné au contrôle de l'état de lubrification d'une bande (4) en circulation, recevant un lubrifiant, dans une presse selon l'une quelconque des revendications 1 à 13,
sachant qu'avec un ou plusieurs capteurs (9) disposés à proximité de la bande, au moins un signal de mesure (M) est produit dépendant de la quantité de lubrifiant sur la bande (4),
**caractérisé en ce qu'**avec un ou plusieurs capteurs (9) capacitifs, un signal de mesure (M) dépendant de la quantité de lubrifiant est produit et à partir de cela l'état de lubrification ou un écart de l'état de lubrification est déterminé par rapport à une ou plusieurs valeurs de comparaison ou à un intervalle de comparaison.

15. Procédé selon la revendication 14, **caractérisé en ce qu**'à partir du signal de mesure (M) un signal d'information (S) avec une information représentant l'état de lubrification est produit avec un système d'évaluation (15), lequel est transmis par ex. à un système de signalisation (16) ou à un système de commande.

16. Procédé selon la revendication 14 ou 15, **caractérisé en ce qu**'avec plusieurs capteurs (9) répartis l'un à côté de l'autre sur la largeur de la bande (4), l'état de lubrification de la bande (4) est surveillé de façon sélective en largeur pour plusieurs positions de largeur individuelles de la bande (4).

17. Procédé selon la revendication 15 ou la revendication 16, **caractérisé en ce que** le dispositif d'application (8, 8') pour appliquer du lubrifiant sur la bande (4) est commandé ou réglé avec un système de commande en fonction du signal de mesure (M) ou du signal d'information (S).
